# EUROPEAN PATENT APPLICATION

(11) **EP 2 472 421 A1**
(43) Date of publication of application: **04.07.2012**
(21) Application number: 12160268.4
(22) Date of filing: 21.05.2009
(51) Int. Cl.: G06F 17/50

(54) **A method and system for determining an alternative configuration of a molding machine component and presenting such alternative configuration to a customer**

(30) Priority: 18.06.2008 US 73394 P
(62) Divisional of application: 09767249.7
(71) Applicant: Husky Injection Molding Systems S.A., 3401 Dudelange (LU)
(72) Inventor: Irwin, Robert Frederick, Essex, VT Vermont 05452 (US)

(57) **Abstract**

A system (**200**) for determining an alternative configuration for a customer configuration of a molding machine component, the system (**200**) comprising: a processing entity (**212**) associated with a vendor (**206**) of the molding machine component, the processing entity (**212**) operatively coupled to a communication network (**208**), the processing entity (**212**) being operable to: receive an indication of the customer configuration for at least a portion of the molding machine component from a customer (**204**); determine the alternative configuration for at least a portion of the customer configuration; generate a variance parameter, based on the customer configuration and the alternative configuration, and compare one or more parameters associated with the customer configuration with one or more parameters associated with a previously ordered configuration in order to render whether the previously ordered configuration is a similar one to the customer configuration.

## Description

### FIELD OF THE INVENTION

The present invention generally relates to, but is not limited to, a molding system, and more specifically the present invention relates to, but is not limited to, a method and system for determining an alternative configuration of a molding machine component and presenting such alternative configuration to a customer.

### BACKGROUND OF THE INVENTION

Molding is a process by virtue of which a molded article can be formed from molding material by using a molding system. Various molded articles can be formed by using the molding process, such as an injection molding process. One example of the molded article that can be formed, for example, from polyethylene terephthalate (PET) material is a preform that is capable of being subsequently blow-molded into a beverage container, such as, a bottle and the like. Other examples of the molded articles include thin-wall containers (i.e. yogurt containers, cups, etc), medical appliances and the like.

In the early days of injection molding, a single-cavity mold for producing a single molded article per molding cycle was typically deployed. Within the single-cavity mold, typically, melt would be delivered from a plasticizing unit to a molding cavity, defined within the single-cavity mold, via a sprue. With developments in the injection molding art, multi-cavity molds have been introduced with an outlook to increase the number of molded articles manufactured per molding cycle.

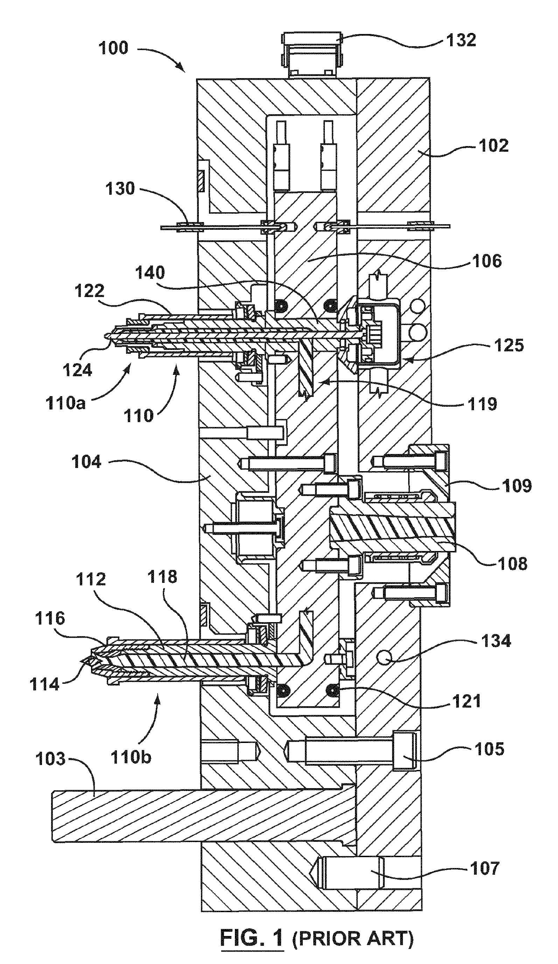

Typically, within the multi-cavity mold, the melt is delivered from the plasticizing unit to each of a plurality of molding cavities of the multi-cavity mold through a melt distribution network, also known to those of skill in the art, as a "hot runner". A typical example of a hot runner is illustrated with reference to Figure 1, which depicts a sectional view of a hot runner 100.

Structure of the hot runner 100 of Figure 1 is well known to those of skill in the art and, as such, only a brief description thereof will be presented herein. Within the specific example being presented herein, the hot runner 100 is configured as a two-drop manifold or, in other words, the hot runner 100 can be configured to supply melt to a mold (not depicted) having two molding cavities defined therein.

The hot runner 100 comprises a backing plate 102 and a manifold plate 104. Housed between the backing plate 102 and the manifold plate 104 is a manifold 106. The backing plate 102 is coupled to the manifold plate 104 by means of one or more fasteners 105, which can be implemented as bolt and the like. In the specific example being presented herein, an alignment member 107 is used to align the backing plate 102 and the manifold plate 104. In the specific example being presented herein, the alignment member 107 is implemented as an alignment dowel.

The hot runner 100 further comprises a guide pin 103, the guide pin 103 being configured to assist in guiding a mold (not depicted) relative to the hot runner 100, when such mold (not depicted) is being installed onto the hot runner 100, when in use in a molding machine (not depicted).

The hot runner 100 further comprises a sprue bushing 108 located within the backing plate 102 and operatively coupled thereto by means of suitable couplers (such as bolts and the like). There is also provided a locating member 109 for positively locating the sprue bushing 108 relative to an injection molding machine platen (not depicted). The sprue bushing 108 is configured to accept, in use, a stream of melt from a plasticizing unit, which is not depicted in Figure 1, but is known to those of skill in the art.

The hot runner 100 further comprises a nozzle assembly 110 or to be more specific, two instances of the nozzle assembly 110 - a first nozzle assembly 110a and a second nozzle assembly 110b, collectively being referred to herein below as the nozzle assembly 110. However, it should be expressly understood that a different number of instances of the nozzle assembly 110 can be used in other embodiments of the present invention.

Within the specific illustration provided herein, the first nozzle assembly 110a is an example of a "valve-gated implementation" thereof and the second nozzle assembly 110b is an example of a "thermally-gated implementation" thereof. Now, those skilled in the art will readily appreciate that this depiction is meant to be an illustration only. A typical implementation of the hot runner 100 will normally include a single style of gating.

The second nozzle assembly 110b includes a nozzle housing 112, a tip insert 114 and a tip retainer 116. Defined within the second nozzle assembly 110b is a melt channel 118, the melt channel 118 for providing a path of travel for the melt within the second nozzle assembly 110b. It should be noted that a similar melt channel 118 is defined within the first nozzle assembly 110a. The melt channel 118 converges into an internal runner network generally depicted at 119 in Figure 1. Generally speaking, the purpose of the internal runner network 119 (including the melt channel 118) is to provide a path of travel for the melt from the sprue bushing 108 to an orifice of a molding cavity of a mold (both not depicted for the sake of simplicity, but well-known to those of skill in the art). Within this implementation, the tip insert 114 (also referred to those of skill in the art as a "hot tip insert") is configured to regulate the flow of the melt towards the orifice of the molding cavity.

Construction of the first nozzle assembly 110a is substantially the same as that of the second nozzle assembly 110b, other than for the flow-controlling means. Accordingly, within the first nozzle assembly 110a, there is provided a valve stem 124, the valve stem 124 for regulating the flow of melt towards the orifice of the molding cavity at appropriate portions of the molding cycle. The valve stem 124 is associated with the valve stem actuator assembly 125, which actuates the valve stem 124 between a closed position and an operating position, as is well known to those of skill in the art.

The internal runner network 119 can be implemented in many different shapes, depending on the number of cavities (not depicted) of the mold (not depicted) that the hot runner 100 is to be used with. Some examples of known shapes for implementing the internal runner network 119 include an "H" shape, an "X" shape and the like (for the avoidance of doubt, the term "shape" refers to an arrangement of various runners within the internal runner network 119).

Further provided within the manifold 106 is a heating arrangement 121, the heating arrangement 121 being configured to maintain a target temperature for the melt flowing through the associated portion of the internal runner network 119. The nozzle assembly 110 further includes a nozzle heater 122 configured to maintain a target temperature for the melt flowing through the associated portion of the melt channel 118.

In the valve-gated implementation of the hot runner 100 of Figure 1 (i.e. within the first nozzle assembly 110a), as part of the first nozzle assembly 110a, there is also provided a manifold bushing 140. In the specific example being presented herein, the manifold bushing 140 performs a dual purpose. Firstly, it provides a diversion (or a branch) for the internal runner network 119, where the melt "diverts" or "branches off' in a direction of approximately ninety degrees. Secondly, the manifold bushing 140 houses a portion of the valve stem 124. Within the thermally-gated implementation (i.e. within the second nozzle assembly 110b implementation), the melt branches off within the manifold 106.

The hot runner 100 comprises a number of additional elements, very well known to those of skill in the art, such as a thermocouple 130 (typically located as proximate to the melt flow as possible to measure the operating temperature of the melt); an electrical connector 132 (for connecting to a source of power); a back plate cooling arrangement 134 (for performing localized cooling function, for example, to maintain the backing plate 102 in a dimensionally stable state or to provide proper operating temperature for certain components, such as O-rings, which are not separately numbered), etc.

When a converter (i.e. an entity who is using a molding machine to convert resin into molded articles) selects the hot runner 100, she needs to consider several factors, including but not limited to, cavitation of the mold, type of resin to be used, type of molded articles to be produced (thinwall, thickwall, etc.), just to name a few. A typical provider of the hot runner 100 (i.e. a vendor) will have numerous choices and combinations available for various hot runner components, depending on some of these or others parameters associated with the converter's proposed use of the hot runner. Just as an example, a given hot runner vendor (such as, for example, Husky Injection Molding Systems Ltd. of Bolton, Canada, www.husky.ca) offers a plethora of choices of types of the nozzle assembly 110, gating solutions (for example, nozzle assemblies 110 including the valve stem 124 and the valve stem actuator assembly 125 or, alternatively, thermally-gated solutions), etc.

A co-owned PCT patent application bearing a publication number WO 02/10993 by Baumann et al. published on February 7th, 2002 discloses a complete system for the online design and purchasing of an injection molding machine apparatus. At least one merchant computer is connected to at least one buyer computer over a communications network whereby a buyer can selectably design and place on order an injection molding machine apparatus. Improved means for storage and sharing of design information of the machine apparatus is presented which results in reduced fabrication cycle time and improved quality and on time delivery.

### SUMMARY OF THE INVENTION

According to a first broad aspect of the present invention, there is provided a method for determining an alternative configuration for a customer configuration of a molding machine component. The method comprises receiving an indication of the customer configuration for at least a portion of the molding machine component from a customer; determining an alternative configuration for at least a portion of the customer configuration; generating a variance parameter, based on the customer configuration and the alternative configuration.

According to a second broad aspect of the present invention, there is provided a system for determining an alternative configuration for a customer configuration of a molding machine component. The system comprises a processing entity associated with a vendor of the molding machine component, the processing entity operatively coupled to a communication network, the processing entity being operable to receive an indication of the customer configuration for at least a portion of the molding machine component from a customer; to determine an alternative configuration for at least a portion of the customer configuration; and to generate a variance parameter, based on the customer configuration and the alternative configuration.

According to a third broad aspect of the present invention, there is provided a system **(200)** for determining an alternative configuration for a customer configuration of a molding machine component, the system **(200)** comprising: a processing entity **(212)** associated with a vendor **(206)** of the molding machine component, the processing entity **(212)** operatively coupled to a communication network **(208),** the processing entity **(212)** being operable to: receive an indication of the customer configuration for at least a portion of the molding machine component from a customer **(204);** determine the alternative configuration for at least a portion of the customer configuration; generate a variance parameter, based on the customer configuration and the alternative configuration, and compare one or more parameters associated with the customer configuration with one or more parameters associated with a previously ordered configuration in order to render whether the previously ordered configuration is a similar one to the customer configuration.

These and other aspects and features of non-limiting embodiments of the present invention will now become apparent to those skilled in the art upon review of the following description of specific non-limiting embodiments of the invention in conjunction with the accompanying drawings.

### DESCRIPTION OF THE DRAWINGS

A better understanding of the non-limiting embodiments of the present invention (including alternatives and/or variations thereof) may be obtained with reference to the detailed description of the non-limiting embodiments along with the following drawings, in which:
Figure 1 depicts a sectional view of a hot runner 100, the hot runner 100 implemented in accordance with known techniques.
Figure 2 depicts a system 200 for determining an alternative configuration of the hot runner 100 and presenting such alternative configuration to a customer, implemented in accordance with a non-limiting embodiment of the present invention.
Figure 3 depicts a flow chart of a method 300, the method 300 executable within the system 200 of Figure 2.
Figure 4 depicts a report page 400, implemented in accordance with a non-limiting embodiment of the present invention.

The drawings are not necessarily to scale and may be illustrated by phantom lines, diagrammatic representations and fragmentary views. In certain instances, details that are not necessary for an understanding of the embodiments or that render other details difficult to perceive may have been omitted.

### DETAILED DESCRIPTION OF EMBODIMENTS

Inventor has developed non-limiting embodiments of the present invention based at least partially on his appreciation of at least one problem that exists with prior art solution for ordering of the hot runner 100. Consider a scenario where a given converter has an ongoing business relationship with the vendor. The given converter will, over time, place a number of orders with the vendor, each time specifying his/her requirements and required configuration for the hot runner 100. In certain cases, needs of the given converter may considerably change over time and, as such, a given order may significantly differ from any previous orders placed with the converter. In other cases, the needs may only slightly change. However, guided by a belief that in order to fulfill these changed needs one needs to make significant changes to the configuration of the hot runner 100, the given converter may specify requirements that are significantly different from previously used requirements. In reality, it may happen that no major changes to the configuration are required. However, by specifying these different requirements, requiring increased engineering and other resources on behalf of the vendor, the hot runner 100 may end up being associated with higher production cost, selling price and the like. Similarly, a situation may occur whereby the requirements specified are similar to those previously specified by another customer, however, without proper cross-referencing, engineering and other resources may need to be dedicated to implement the specified requirements. This will again result in wasted time and increased cost / selling price.

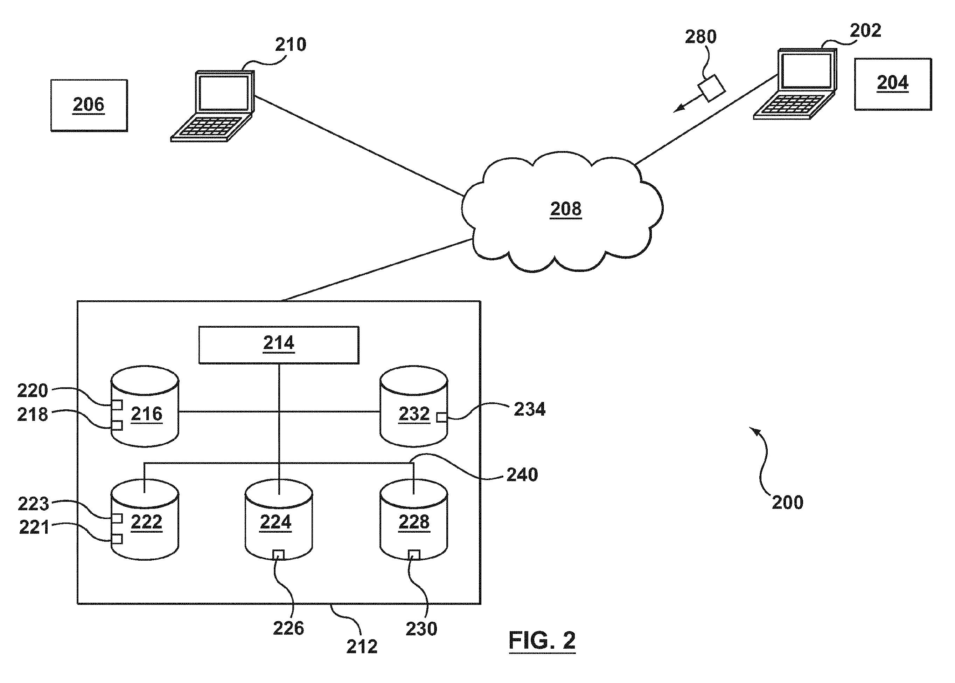

With reference to Figure 2, there is depicted a non-limiting embodiment of a system 200 suitable for implementing non-limiting embodiments of the present invention.

The system 200 comprises a customer computing apparatus 202. The customer computing apparatus 202 is associated with a customer 204. The customer 204 is an entity that has entered into a business relationship with a vendor 206. Within the embodiments being described herein, the vendor 206 is a manufacturer and/or a supplier of molding equipment. In a specific embodiment, the vendor 206 can be a manufacturer and/or supplier of a broad range of molding equipment, such as injection molding equipment, molds, hot runners, pre-molding treatment equipment, post-molding treatment equipment, handling robots, single stage injection-blow-molding equipment, compression molding equipment and the like. An example of a vendor that manufactures and supplies at least some of these products is Husky Injection Molding System Limited of Bolton, Canada. In other embodiments of the present invention, the vendor 206 can be a manufacturer and/or supplier of a particular line of products, such as, for example, manufacturer and/or supplier of molds and/or hot runners and/or components thereof.

The customer computing apparatus 202 can be implemented as a general purpose computing apparatus, as a desktop, laptop, a Personal Digital Assistant (PDA), a wireless hand held communication device and the like. The customer computing apparatus 202 can be coupled to a communication network 208. The communication network 208 can be implemented as a wireless network, a wired network or a combination thereof. An example of the communication network 208 can be implemented as a wide area network (such as the Internet and the like), a local area network or a combination thereof. As is known to those of skill in the art, the communication network 208 can implement suitable encryption and decryption protocols for secure communication between two or more endpoints coupled to the communication network 208 (such as, for example, the customer computing apparatus 202).

Associated with the vendor 206 is a vendor computing apparatus 210, also coupled to the communication network 208. The vendor computing apparatus 210 can also be implemented as a general purpose computing apparatus, as a desktop, laptop, a Personal Digital Assistant (PDA), a wireless hand held communication device and the like. The vendor computing apparatus 210 can be associated with a salesperson of the vendor 206 or, alternatively, with a customer services representative associated with the vendor 206, or, alternatively, a web administrator associated with the vendor 206. Naturally, the vendor computing apparatus 210 can comprise a plurality of computing apparatuses (not depicted) associated with the vendor 206.

Also provided within the system 200 is a processing entity 212 also associated with the vendor 206. To that extent the processing entity 212 is under control and/or management of the vendor 206 and may be located at a same geographical location as the vendor 206 or, alternatively, can be located at a remote location.

Within the specific non-limiting embodiment being depicted herein, the processing entity 212 is also coupled directly to the communication network 208. However, this needs not be so in every embodiment of the present invention. For example, in alternative non-limiting embodiments of the present invention, the processing entity 212 can be coupled to the communication network 208 via a separate communication network (not depicted), via a firewalling entity and the like.

The processing entity 212 comprises a processor 214. The processor 214 can be implemented as a general-purpose or specific-purpose computing device. The processor 214 can be configured to perform various routines, for example, the processor 214 can be configured to: (a) provide interface with the communication network 208 (for example, via a modem or other suitable interfaces) and (b) coordinate functions performed by other components of the processing entity 212.

Additionally, the processor 214 comprises logic or programs to provide via the communication network 208 one or more screen renderings (such as, for example, web pages and the like). In a sense, the processor 214 can be configured to act as a web server. To that extent, the processor 214 maintains data about one or more pages to be presented via the communication network 208. How such information is maintained is known to those skilled in the art. In a particular non-limiting embodiment, Hyper Text Markup Language (HTML) can be used, however, JAVA programming language and other suitable languages can be used. The data about one or more pages can be maintained by the web master using, for example, the vendor computing apparatus 210.

Additionally, the processor 214 can comprise internal memory, which is not depicted but is well known to those of skill in the art, and can comprise random-access memory (RAM) and the like.

The processing entity 212 further comprises a product database 216. The product database 216 maintains one or more fields configured to maintain product data 218. Product data 218 is indicative of one or more of the products provided by the vendor 206. For example, the product data 218 may contain information about one or more hot runner components (such as the nozzle assembly 110) manufactured and/or sold by the vendor 206. The product data 218 may further include cost and/or price information. Additionally, the product data 218 may include product compatibility information.

The product database 216 can further maintain one or more fields configured to maintain quotation data 220. Quotation data 220 includes information about one or more previously rendered quotes and, include *inter alia* price information, bill of material, etc.

The processing entity 212 further comprises a customer management database 222. The customer management database 222 maintains one or more fields configured to maintain customer data 223. Customer data 223 can be representative of customer-related information, such as contact details, billing information, contacts and the like associated with one or more customers associated with the vendor 206, such as for example, the customer 204. The customer data 223 can further include information representative of previous orders made by a given customer, such as the customer 204.

The customer management database 222 can further maintain one or more fields configured to maintain user data 221. User data 221 can be representative of access credentials for use with the processing entity 212. In a specific example, the user data 221 comprises a user name and a password, however, other variations are also possible. The user data 221 can be associated with one or more authorized users, such as a representative of the customer 204 and the like. In certain embodiments of the present invention, a given customer (such as customer 204) may have one or more authorized users and each authorized user may get a dedicated set of access credentials stored in the user data 221 in the customer management database 222.

The processing entity 212 further comprises an Enterprise Resource Planning Database 224, which will also be referred herein below, for the sake of simplicity, as an "ERP database 224". The ERP database 224 maintains one or more fields configured to maintain resource planning data 226. The resource planning data 226 is representative of current projects managed by the vendor 206. The resource planning data 226 may include some or all of the following: project data, bill of material data, individual component data, items in-stock, items on-order and the like.

The processing entity 212 further comprises a drawing database 228. Drawing database 228 maintains one or more fields configured to maintain drawings data 230. Drawings data 230 may include one or more engineering drawings (or other types of drawings, such as construction drawings, for example) representative of specific components delivered to customers, such as the customer 204 or components being designed by representatives of the vendor 206. Examples of drawings that can be maintained within the drawings data 230 include but are not limited to: injection machine drawings, auxiliary equipment drawings, injection unit drawings, mold drawings, mold component (ex, a neck ring or a slide) drawings, hot runner 100 drawings, hot runner component (such as the nozzle assembly 110) drawings and the like.

The processing entity 212 further comprises a customer standards database 232. The customer standards database 232 maintains one or more fields configured to maintain customer standards data 234. The customer standards data 234 is representative of design or other standards established by the customers (i.e. customer-specific standards), such as the customer 204. For example, a given customer, such as the customer 204, may have provided a list of standards to the vendor 206 and this indication is maintained within the customer standards data 234 in association with the customer 204. Examples of such standards may include things like: the type of an injection unit (two-stage, one-stage, etc.), type and design of molded articles produced (such as for example, a particular neck finish used or not used), type of gating (such as for example, valve gated or thermally gated nozzles for hot runners) and the like.

Each of the product database 216, the customer management database 222, the ERP database 224, the drawing database 228 and the customer standards database 232 is coupled to the processor 214 via an internal communication network 240. The internal communication network 240 can be implemented as a local area network, a portion of the communication network 208, a BUS connection, a parallel or a serial connection and the like.

Even though the product database 216, the customer management database 222, the ERP database 224, the drawing database 228 and the customer standards database 232 have been depicted as separate databases maintained within the processing entity 212, this needs not be so in every embodiment of the present invention. For example, in alternative non-limiting embodiments of the present invention rather than maintaining a separate database, a single database can be maintained with fields configured to maintain data as maintained within the product database 216, the customer management database 222, the ERP database 224, the drawing database 228 and the customer standards database 232 of Figure 2. By the same token, some of the databases of the processing entity 212 of Figure 2 can be collapsed. For example, as an alternative, the drawings data 230 can be maintained within the ERP database 224. Other variations are, of course, possible.

How the information is populated within the databases, is not particularly limited. For example, customer data 223 associated with the customer 204 can be populated when the customer 204 first contacts the vendor 206 and it can be updated as the information changes and as reported by the customer 204. Similarly, the quotation data 220 can be updated and maintained as new quotes are rendered.

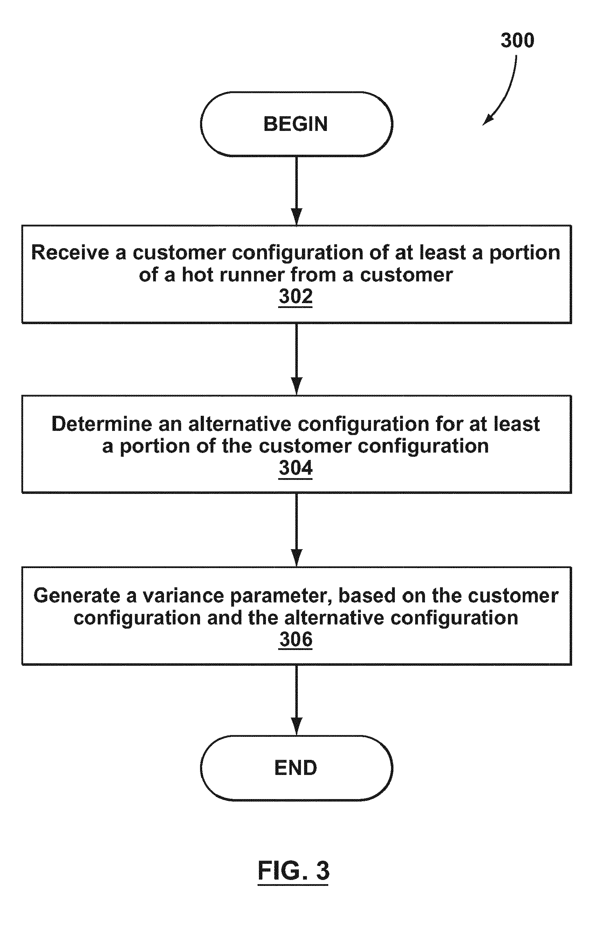

Given the system 200 of Figure 2, it is possible to execute a method for determining an alternative configuration of a hot runner and presenting such alternative configuration to a customer. A non-limiting embodiment of a method 300, implemented in accordance of a non-limiting embodiment of the present description, will now be described in greater detail with reference to Figure 3. The method 300 can be conveniently executed at the processing entity 212 and, more specifically, by the processor 214. For the purposes of the description to be presented herein below, the following assumptions will be made:
(i) customer 204 has entered into a business relationship with the vendor 206 and for the purposes of the description to be presented herein below the customer 204 conducts business under a trade name "CREATIVE";
(ii) customer 204 has been provided with access credentials for the use of the processing entity 212 and the access credentials have been properly provisioned within the user data 221 of the customer management database 222 in association with the customer 204;
(iii) customer 204 has ordered a number of hot runners 100 from the vendor 206 and information about previous orders has been stored within the customer data 223 of the customer management database 222 in association with the customer 204; and
(iv) customer 204 is desirous of acquiring another hot runner 100 from the vendor 206.

### Step 302 - receiving a customer configuration for at least a portion of the hot runner 100 from a customer 204

Method 300 begins at step 302, where the processor 214 receives a customer configuration for at least a portion of the hot runner 100 from the customer 204. In a particular non-limiting embodiment, the customer computing apparatus 202 can capture the indication of the customer configuration from the customer 204.

In an example non-limiting embodiment of the present invention, the customer 204 accesses a web site associated with the vendor 206. This can be done in a conventional manner using a web application (such as Microsoft® Internet Explorer® or the like) and by typing in a Unified Resource Locator (URL) or by simply clicking on an appropriate link. For example, the customer 204 can access a portion of the web site associated with the vendor 206, the portion being dedicated to a quote tool - i.e. a tool accessible by the customer 204 for obtaining a quote (such as selling price, lead time, performance levels and the like) associated with a particular configuration of the hot runner 100 that the customer 204 is desirous of purchasing from the vendor 206.

In a particular non-limiting embodiment of the present invention, the processor 214 first causes a verification page (not depicted, but well known to those of skill in the art) to be presented to the customer 204 on the customer computing apparatus 202 via the communication network 208. It will be recalled that the processor 214 can act as a web server and those skilled in the art will appreciate numerous techniques to execute the step of presenting the verification page from the processor 214 to the customer computing apparatus 202. As an example, the verification page may solicit from the customer 204 and transmit to the processor 214 a set of access credentials, such as a user name and a password. Upon receipt of the access credentials, the processor 214 accesses the customer data 223 in the customer management database 222 to verify access credentials. Should the verification fail, an appropriate error message can be presented to the customer 204. Optionally or additionally, the error message can also advise the customer 204 to call a technical support line or another representative of the vendor 206 to resolve access issues.

On the other hand, if the verification is successful, the customer 204 is granted access. In some embodiments of the present invention, successful verification of the access credentials can cause establishment of a secure communication session between the processor 214 and the customer computing apparatus 202 via the communication network 208, as is known to those of skill in the art. Alternatively, the secure communication session can be established in a separate routine.

Next, the customer 204 provides customer configuration associated with the hot runner 100. How this part of the step is implemented is not particularly limited. For example, an appropriate screen rendering (such as, for example, a web page (not depicted)) can be presented to the customer 204 to solicit the customer configuration associated with the hot runner 100. An example of one such implementation for the appropriate screen rendering (such as, for example, a web page) will be described in greater detail herein below. Alternatively, the customer 204 can upload a file containing the customer configuration associated with the hot runner 100.

The customer configuration contains one or more parameters representative of the requirements of the customer 204 as far as the hot runner 100 is concerned. Some examples of the one or more parameters include, but are not limited to, plate width, plate height, pitch (or, more specifically, nozzle coordinate locations or pitch spacing), nozzle selection, number of nozzles and the like.

The customer computing apparatus 202 captures the customer configuration and transmits a data element 280 (Figure 2) containing the customer configuration to the processor 214 via the communication network 208. By receiving and extracting data from the data element 280, the processor 214 effectively receives the customer configuration associated with the hot runner 100.

Next, the processor 214 proceeds to execution of step 304.

### Step 304 - determining an alternative configuration for at least a portion of the customer configuration

Next, at step 304, the processor 214 determines an alternative configuration for at least a portion of the customer configuration.

First, the processor 214 determines if similar configurations have been provided in the past. More specifically, the processor 214 accesses some or all of the product database 216, the ERP database 224 and the drawing database 228 and determines if similar configurations have been provided. In some embodiments of the present invention, the processor 214 can check for similar configurations previously provided in association with the customer 204. In alternative non-limiting embodiments of the present invention, the processor 214 can check for similar configuration previously provided in association with the customer 204 as well as other customers associated with the vendor 206.

In some embodiments of the present invention, the processor can execute a comparison algorithm in order to determine such similar configurations. In an example non-limiting implementation of the present invention, the comparison algorithm compares certain of the one or more parameters associated with the customer configuration associated with the hot runner 100 received as part of step 302 with the one or more parameters associated with previous configurations. In a specific non-limiting embodiment, the comparison algorithm compares the following one or more parameters:
- plate width;
- plate height;
- number of drops (i.e. number of the instances of the nozzle assembly 110);

In alternative non-limiting embodiments of the present invention, the comparison algorithm can compare other parameters or same parameters, as well as a number of additional parameters (for example, gating style selected, etc.). Examples of some of the additional parameters that could be compared include, but are not limited to, hot runner channel dimension (i.e. the dimension of a portion of the internal runner network 119), operating melt temperature, resin type, operating melt pressure, etc.

In a specific non-limiting embodiment of the present invention, as part of executing the comparison algorithm, the processor 214 accesses the customer standards database 232 and the comparison algorithm retrieves data associated with the customer 204 stored within the customer standards data 234. The comparison algorithm can then use so-extracted data to generate an indication of which specific of the above-described or other parameters should be compared as part of execution of the comparison algorithm. For example, assuming that the customer 204 has provisioned a customer standard that only valve-gated type of the nozzle assembly 110 is suitable for the customer 204, the comparison algorithm will only render those previous configurations that used valve-gated type of the nozzle assembly 110 as similar configurations.

In any case, the processor 214 compiles a list of similar configurations. In some embodiments of the present invention, the processor 214 can then further determine which one of the similar configurations meets or is aligned with a configuration objective. In some embodiments of the present invention, the configuration objective comprises a cost objective. In this example, the configuration objective is associated with reduced cost associated with producing the hot runner 100 - for example, due to lower engineering and other costs associated with producing the hot runner 100 according to an alternative configuration compared with the hot runner 100 in accordance with customer configuration received as part of step 302. In alternative non-limiting embodiments of the present invention, the configuration objective comprises a selling price objective. In this example, the configuration objective is associated with reduced selling price charged to the customer 204 for the hot runner 100 produced in accordance with the alternative configuration. In yet further non-limiting embodiments of the present invention, the configuration objective comprises a lead time objective (i.e. faster delivery), a performance objective and the like.

Using as an example a scenario where the configuration objective is the selling price objective, the processor 214 determines which similar previously ordered configuration would result in a lower selling price compared to the selling price of the hot runner 100 designed in accordance with the customer configuration received as part of step 302. Effectively, the processor 214 determines which ones of the similar configurations previously ordered are aligned with the configuration objective.

It is worthwhile noting that in some embodiments of the present invention, the configuration objective is hard coded into the comparison algorithm, for example, by the vendor 206. This is particularly applicable, but not limited to those embodiments, where the configuration objective comprises cost or selling price. In alternative non-limiting embodiments of the present invention, an indication of the configuration objective can be received from the customer 204. This is particularly applicable, but not limited to those embodiments, where the configuration objective comprises reduced lead time or improved performance.

The processor 214 then proceeds to step 306.

### Step 306 - generating a variance parameter, based on the customer configuration and the alternative configuration.

Next, at step 306, the processor 214 generates a variance parameter, based on the customer configuration and the alternative configuration. More specifically, the processor 214 then generates the variance parameter for the hot runner 100, based on the customer configuration received as part of step 302 and the alternative configuration determined as part of step 304. Effectively, the variance parameter spells out variance (i.e. differences) between the alternative configuration and the customer configuration. The differences can be in terms of configuration parameters, cost, price, delivery time, other configuration objectives and the like.

In embodiments of the present invention, the alternative configuration may comprise a plurality of alternative configurations and within these non-limiting embodiments, the processor 214 generates a plurality of variance parameters corresponding, respectively, to plurality of alternative configurations.

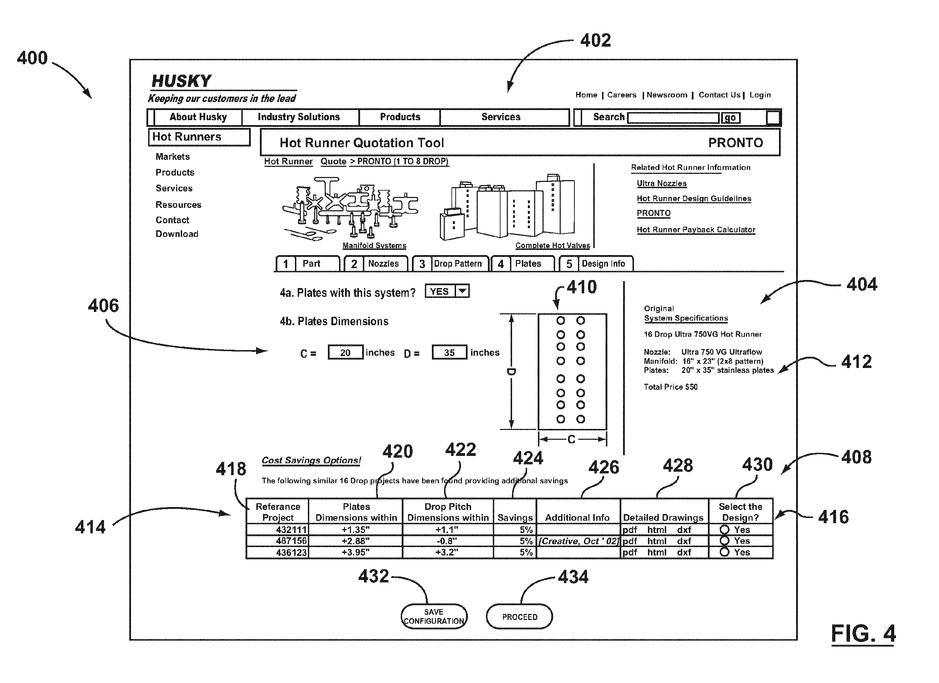

Next, the processor 214 causes the variance parameter (or the plurality of variance parameters) to be displayed to the customer 204. More specifically, in order to display the variance parameter to the customer 204, the processor 214 causes a report page to be displayed on the customer computing apparatus 202. An example of a report page 400, implemented in accordance with a non-limiting embodiment of the present invention, will now be described with reference to Figure 4.

The report page 400 contains several regions. The report page 400 comprises a first region 402, which houses identification and marketing information associated with the vendor 206, navigation pane, search pane and the like. It should be noted that the first region 402 is an optional field and can be designed in a different manner or omitted altogether.

The report page 400 further comprises a second region 404. In the specific non-limiting embodiment presented herein, the second region 404 comprises solicitation information 406 and reporting information 408. The solicitation information 406 contains questions in order to solicit at least a portion of the customer configuration, as described in greater detail in regard to step 302 above. In the particular example being presented herein, the solicitation information 406 solicits information representative of whether or not hot runner plates are to be included with the order (yes/no drop down menu) and plate dimensions (i.e. width and length). The solicitation information 406 further provides a visual representation 410 of the hot runner plates being ordered to guide the customer 204 through answering the questions. It should be noted that the solicitation information 406 is an optional field and, as such, in alternative embodiments of the present invention, solicitation information 406 can be presented using a separate screen rendering, such as a web page, for example (not depicted).

Reporting information 408 contains original quote information 412. Original quote information 412 is entitled, for example, "Original System Specification" and contains information provided in the customer configuration received as part of step 302, as well as a price quote based on the customer configuration. More specifically, based on the customer configuration received as part of this example, the customer 204 specified the following parameters: "16 Drop Ultra 750 VG Hot Runner. Nozzle: Ultra 750 VG Ultraflow. Manifold: 16" x 23" (2x8 pattern). Plates: 20" x 35" stainless plates". It should be noted that some of this information may have been solicited using the solicitation information 406 or a separate screen rendering, such as a web page, for example (not depicted). The original quote information 412 also includes a price quote, which in this case contains "Total Price: $50" (it should be noted that the total price contains a fictitious amount for the purposes of illustration only).

Reporting information 408 further contains adjusted quote information 414, which generally includes *inter alia* the above-determined variance parameter. The adjusted quote information 414 is based on the alternative configuration (or a plurality of alternative configurations) determined as part of step 304. In this specific example, the adjusted quote information 414 is based on three instances of the alternative configuration.

In the specific example being presented herein, adjusted quote information 414 is represented in a form of a table 416. The table 416 contains several columns, such as reference project 418 (denoting a unique reference number associated with a given alternative quote), dimension variance 420 (denoting variance between the plate dimension specified in the customer configuration and the alternative configuration), drop pitch variance 422 (denoting variance between the drop pitch specified in the customer configuration and the alternative configuration), savings information 424 (denoting price savings over the customer configuration, expressed as a percentage or an absolute dollar amount or, alternatively, the final reduced price associated with the alternative configuration), additional information 426 (denoting additional information, such as previous usage information associated with the customer 204), detailed drawing request 428 (a link allowing the customer 204 to view drawings associated with the alternative configuration, in this particular example providing a choice of three formats), selection field 430 (which allows the customer 204 to select a given one of the alternative configurations and, by doing so, provide an indication of desire to proceed with the alternative configuration). It is noted that the selection field 430 can be implemented as radio buttons, allowing the customer 204 to select only one alternative configuration to proceed with. In alternative embodiments of the present invention, the selection field 430 can be implemented differently (for example, using check buttons) to enable the customer 204 to select more than one alternative configuration.

As an illustration of the table 416, consider the second alternative configuration presented therein. The reference project 418 column contains "487156", which is the unique identifier of the second alternative configuration. The dimension variance 420 column contains "+2.88" ", which denotes variance in the plate dimension. The drop pitch variance 422 column contains "-0.8" ", which denotes variance in the drop pitch. Savings information 424 column contains "5%", which denotes a selling price difference (this amount is, again, fictitious and is meant for illustration purposes only). The additional information 426 column contains "Creative, Oct '02", which denotes that this particular alternative configuration was ordered by the customer 204 in October of 2002. Detailed drawing request 428 column contains links to the drawings of this second alternative configuration. And, finally, the selection field 430 column contains a radio button to enable the customer 204 to select this second alternative configuration.

It is worthwhile noting, that should the customer request additional drawings (for example, by clicking a link within the detailed drawing request 428) and if the drawing is associated with the project associated with a different customer (as, for example, is the case with the first alternative configuration and the third alternative configuration depicted in the table 416), this drawing is adapted to remove any confidential information (such as, but not limited to, identity of the other customer, dimensions, tolerance information, etc.). This drawing adaptation can be implemented using off-the-shelf software known to those of skill in the art or, alternatively, manually by a member of staff associated with the vendor 206.

The report page 400 further includes two action buttons - a save configuration button 432 and a proceed button 434. By clicking the save configuration button 432, the customer 204 can save information presented as part of the report page 400 and refer to it later. By clicking the proceed button 434, the customer 204 can proceed to the next step, which can be, for example, (i) viewing a summary of the order, (ii) printing an order form or (iii) completing an order.

The report page 400 may include a number of additional buttons to enable the customer 204 to execute additional actions. For example, a button (not depicted) can be provided to enable the customer 204 to request assistance, which could enable an on-line chat, request a call-back, send an e-mail to a representative or provide a local contact. Alternatively or additionally, a button (not depicted) can be provided to enable the customer 204 to request a formal quote document, which can be then mailed or e-mailed to the customer 204. Alternatively or additionally, a button (not depicted) can be provided, which can enable the customer 204 to request a price negotiation based on one or more alternative configurations. Price negotiation can take place over electronic communication, over the phone or in person.

It is worthwhile noting, that if the customer does not check any radio button in the selection field 430 and clicks the proceed button 434, it will be assumed that the customer 204 wishes to proceed with the quote based on the customer configuration. If, on the other hand, the customer 204 checks one of the radio buttons in the selection field 430 and then clicks the proceed button 434 (i.e. effectively enabling the processor 214 to receive an indication of desire of the customer 204 to proceed with one of the alternative configurations), it shall be assumed that the customer 204 wishes to proceed using the quote information based on the alternative configuration. What happens next is not particularly limited. For example, upon the customer 204 selecting the proceed button 434, a message can be sent to a representative of the vendor 206 with contact details of the customer 204 and the representative can contact the customer 204 to finalize the order. Alternatively, the processor 214 can generate an order form to enable the customer 204 to print the order form and fax (or mail) it to the vendor 206. Numerous other alternatives are, of course, possible.

Effectively, the customer has been presented with an alternative configuration, based on one or more alternative configurations vis-à-vis customer configuration, the one or more alternative configurations aligning to a configuration objective (such as, in the illustrated example, price savings), as well as a variance parameter associated with each of the one or more alternative configurations. The variance parameter can enable the customer 204 to decide whether to proceed with the customer configuration or a given one of the one or more alternative configurations.

It should be noted that in some embodiments of the present invention, the method 300 can be executed "proactively" - i.e. every time the customer 204 (or another customer) uses the quote tool. In other embodiments of the present invention, the method 300 can be executed in an "on-demand" manner, i.e. when the customer 204 requests an alternative quote. This request can be provided, for example, as part of providing customer configuration as part of step 302 or, alternative, in a separate step using a separate screen rendering, such as a web page, for example (not depicted). Even though not depicted, those skilled in the art will easily appreciate how such routine could be implemented, for example, by presenting an appropriate check button for the customer 204 to select, should she or he wish to receive an alternative configuration that is aligned with the configuration objective.

Even though the foregoing description has been presented with an example of a network-implemented architecture, this needs not be so in every embodiment of the present invention. For example, in alternative non-limiting embodiments of the present invention, it is contemplated that the method 300 can be executed locally on the customer computing apparatus 202. Appropriate software can be downloaded to the customer computing apparatus 202 via an Internet connection or be installed using a CD-ROM or other suitable means. It is expected that those skilled in the art having benefit of teachings presented herein above will be able to modify the method 300 for the local implementation. In yet further non-limiting embodiments, the execution of the method 300 can be distributed - in the sense of some steps being executed locally on the customer computing apparatus 202, with the customer computing apparatus 202 accessing remote entities (such as the databases maintained within the processing entity 212, for example) via the communication network 208 for appreciating of certain data stored therein.

Even though the foregoing description has used the hot runner 100 as an example to demonstrate execution of the method 300, the method 300 can be equally applied to other molding machine components. For example, in an alternative execution, the method 300 can be applied to suggesting an alternative configuration of a mold base, post-mold treatment devices, in-mold treatment devices, upstream and downstream components, as well as other components of the molding machine.

Description of the non-limiting embodiments of the present inventions provides examples of the present invention, and these examples do not limit the scope of the present invention. It is to be expressly understood that the scope of the present invention is limited by the claims. The concepts described above may be adapted for specific conditions and/or functions, and may be further extended to a variety of other applications that are within the scope of the present invention. Having thus described the non-limiting embodiments of the present invention, it will be apparent that modifications and enhancements are possible without departing from the concepts as described. Therefore, what is to be protected by way of letters patent are limited only by the scope of the following claims:

## Claims

1. A system **(200)** for determining an alternative configuration for a customer configuration of a molding machine component, the system **(200)** comprising:
a processing entity **(212)** associated with a vendor **(206)** of the molding machine component, the processing entity **(212)** operatively coupled to a communication network **(208),** the processing entity **(212)** being operable to:
receive an indication of the customer configuration for at least a portion of the molding machine component from a customer **(204);**
determine the alternative configuration for at least a portion of the customer configuration;
generate a variance parameter, based on the customer configuration and the alternative configuration, and
compare one or more parameters associated with the customer configuration with one or more parameters associated with a previously ordered configuration in order to render whether the previously ordered configuration is a similar one to the customer configuration.

2. The system **(200)** of claim **1,** wherein:
the previously ordered configuration is associated with the customer (204).

3. The system **(200)** of claim 1, wherein:
a first one of the previously ordered configuration is associated with the customer **(204)** and a second one of the previously ordered configuration is associated with another customer.

4. The system **(200)** of claim **1,** wherein:
the processing entity **(212)** further includes a product database **(216),** the product database **(216)** maintains one or more fields configured to maintain quotation data **(220),** the quotation data **(220)** includes information about one or more previously rendered quotes.

5. The system **(200)** of claim **1,** wherein:
the processing entity **(212)** is operable to:
determine if similar configurations have been provided in the past; and
determine which similar previously ordered configuration would result in a lower selling price compared to a selling price of a hot runner **(100)** designed in accordance with the customer configuration.

6. The system **(200)** of claim **1,** wherein:
the processing entity **(212)** is operable to:
check for similar configuration previously provided in association with the customer **(204)** as well as other customers associated with the vendor **(206).**

7. A method of operating a processing entity **(212)** associated with a vendor **(206)** of a molding machine component, the processing entity **(212)** operatively coupled to a communication network **(208),** the method for determining an alternative configuration for a customer configuration of the molding machine component, the method comprising:
directing the processing entity **(212)** to:
receive an indication of the customer configuration for at least a portion of the molding machine component from a customer **(204);**
determine the alternative configuration for at least a portion of the customer configuration;
generate a variance parameter, based on the customer configuration and the alternative configuration, and
compare one or more parameters associated with the customer configuration with one or more parameters associated with a previously ordered configuration in order to render whether the previously ordered configuration is a similar one to the customer configuration.

8. The method of claim 7, wherein:
the previously ordered configuration is associated with the customer **(204).**

9. The method of claim 7, wherein:
a first one of the previously ordered configuration is associated with the customer **(204)** and a second one of the previously ordered configuration is associated with another customer.

10. The method of claim 7, wherein:
the processing entity **(212)** further includes a product database **(216),** the product database **(216)** maintains one or more fields configured to maintain quotation data **(220),** the quotation data **(220)** includes information about one or more previously rendered quotes.

11. The method of claim 7, wherein:
the processing entity **(212)** is operable to:
determine if similar configurations have been provided in the past; and
determine which similar previously ordered configuration would result in a lower selling price compared to a selling price of a hot runner **(100)** designed in accordance with the customer configuration.

12. The method of claim 7, wherein:
the processing entity **(212)** is operable to:
check for similar configuration previously provided in association with the customer **(204)** as well as other customers associated with the vendor **(206).**
